# DEMANDE DE BREVET EUROPEEN

(11) **EP 3 358 242 A1**
(43) Date de publication de la demande: **08.08.2018**
(21) Numéro de dépôt: 17305123.6
(22) Date de dépôt: 03.02.2017
(51) Int. Cl.: F21K 9/272, F21Y 115/10

(54) **DISPOSITIF D'ÉCLAIRAGE**

(71) Demandeur: M.I.H., 060000 Nice (FR)
(72) Inventeur: VERMIGLIO, Yves, 06700 SAINT LAURENT DU VAR (FR)
(74) Mandataire: Decobert, Jean-Pascal

(57) **Abrégé**

M.I.H.

Dispositif d'éclairage comprenant un tube (1) qui comprend :
o une portion principale (2) s'étendant suivant une dimension longitudinale du tube et comprenant au moins un élément émettant de la lumière,
o une partie d'alimentation électrique (3) du tube comprenant un premier cordon d'alimentation (4) raccordé par l'une de ses extrémités à la portion principale (2) et adapté à l'autre de ses extrémités pour être raccordé à un dispositif d'alimentation électrique (A);
o deux extrémités (5) entre lequel s'étend la portion principale (2),
caractérisé en ce qu'au moins l'une des extrémités (5) du tube comprend au moins un picot (6) configuré pour coopérer avec l'un parmi un socle ou un connecteur amovible (7).

## Description

### DOMAINE DE L'INVENTION

La présente invention est relative notamment à un dispositif d'éclairage.

Une application préférée concerne l'industrie des accessoires d'aquarium pour particulier.

### ARRIERE-PLAN TECHNOLOGIQUE

Actuellement, les éclairages d'aquariums sont réalisés grâce à des tubes à LED ou des néons étanches. Une douille présente sur un socle fixée à l'aquarium permet le maintien et l'alimentation en électricité du tube. Cette solution est complexe à mettre en place. D'une part à cause de l'étanchéité à conserver dans un système dit « à prise », et d'autre part à cause des différents types de douilles existants. En effet, il existe par exemple des douilles de normes dites G5 et/ou G13 pouvant être adaptées sur des tubes de normes T5 et/ou T8. A cela s'ajoute la longueur variable des aquariums entrainant une variation en longueur de la taille des socles, et donc la nécessité de tubes plus ou moins grands. Ainsi, il existe un nombre de types de tubes d'éclairage aussi important que de types de socles/douilles. Cela rend le remplacement et l'utilisation de ce type d'accessoire complexes.

Certains tubes LED proposent une réponse à ce problème technique d'avoir un tube d'éclairage dont l'étanchéité est facilement réalisable et adaptable aux différents aquariums. La solution mise en place est de retirer les connecteurs électriques à chacun des embouts du tube et de déporter l'alimentation directement dans le tube grâce à un cordon d'alimentation. La fixation dans l'aquarium est réalisée grâce à des ventouses.

Cette solution résout effectivement le problème d'avoir un éclairage qui s'adapte à tous les aquariums (plus besoin de le fixer sur la douille) tout en facilitant la réalisation de l'étanchéité du système.

Un inconvénient en est que les ventouses ne sont pas un système de maintien du tube sécurisant. Plusieurs problèmes peuvent survenir avec ce type de fixations. Le premier est présent si les ventouses ne sont pas assez adhérentes. Dans ce cas, le tube d'éclairage peut se détacher inopinément. D'autre part, en cas d'accident notamment en tirant sur le cordon d'alimentation, tout le système peut se décrocher. Le second problème peut survenir si les ventouses sont trop collées aux parois. Dans un tel cas, le changement des tubes peut être complexe du fait du manque de prise, notamment lorsque le tube est positionné au fond de l'aquarium.

L'invention permet de résoudre tout ou partie des inconvénients des techniques actuelles.

### RESUME DE L'INVENTION

Un aspect de l'invention concerne en particulier un dispositif d'éclairage comprenant un tube qui comprend :
- une portion principale s'étendant suivant une dimension longitudinale du tube et comprenant au moins un élément émettant de la lumière,
- une partie d'alimentation électrique du tube comprenant un premier cordon d'alimentation raccordé par l'une de ses extrémités à la portion principale et adapté à l'autre de ses extrémités pour être raccordé à un dispositif d'alimentation électrique ;
- deux extrémités entre lesquels s'étend la portion principale,

De façon avantageuse, ce dispositif est tel qu'au moins l'une des extrémités du tube comprend au moins un picot configuré uniquement pour coopérer avec l'un parmi un socle ou un connecteur amovible. Ce connecteur amovible peut faire partie du dispositif.

Cette disposition particulière permet au tube de se positionner en coopération avec une douille présente sur un socle existant qui aura été préalablement désactivée. Ainsi, on conserve les moyens de fixation du tube dans un aquarium les plus sécurisants, tout en déportant l'alimentation électrique afin de ne plus dépendre des douilles. Le socle peut ainsi être désactivé électriquement.

Suivant une possibilité, le connecteur amovible comprend au moins un corps et au moins un picot additionnel, et de préférence ledit corps comprend une base configurée pour coopérer avec l'un des picots de l'une des extrémités du tube et de préférence le au moins un picot additionnel est configuré pour coopérer avec un socle.

Cette solution avantageuse permet l'ajout de connecteurs aux embouts du tube. Ces connecteurs permettent d'une part une adaptabilité du tube suivant n'importe quels formats de douille (G5 ou G13 principalement) et d'autre part une adaptabilité en longueur pour correspondre avec la longueur de l'entraxe des deux douilles.

L'invention concerne aussi un système comprenant un dispositif d'éclairage défini précédemment, et dans lequel le socle comprend un élément de fixation apte à coopérer avec l'un parmi le picot ou le picot additionnel.

De cette manière on comprend aisément que la fixation du tube dans l'aquarium dépend directement du socle. Ledit socle comprenant ensuite les douilles. De plus, la possibilité de faire coopérer le tube avec soit son extrémité, soit un connecteur amovible permet de s'adapter à la plus grande majorité des socles existants.

### BREVE INTRODUCTION DES FIGURES

D'autres caractéristiques, buts et avantages de la présente invention apparaitront à la lecture de la description détaillée qui suit, et en regard des dessins annexés donnés à titre d'exemple non limitatifs et sur lesquels :

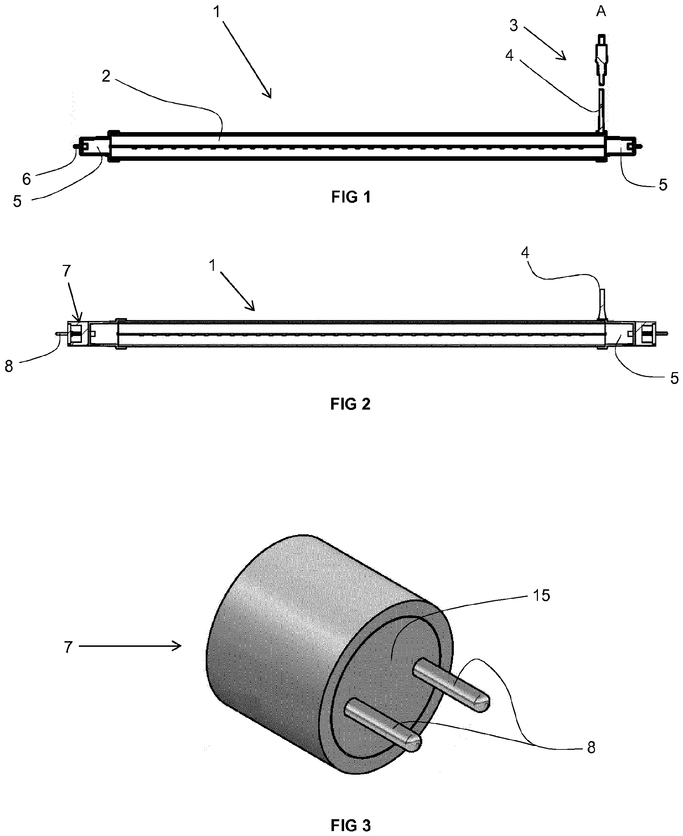

- la figure 1 montre une vue du tube sans connecteur amovible ;
- la figure 2 est une vue du tube avec un connecteur amovible :
- la figure 3 est une vue d'un connecteur amovible ;

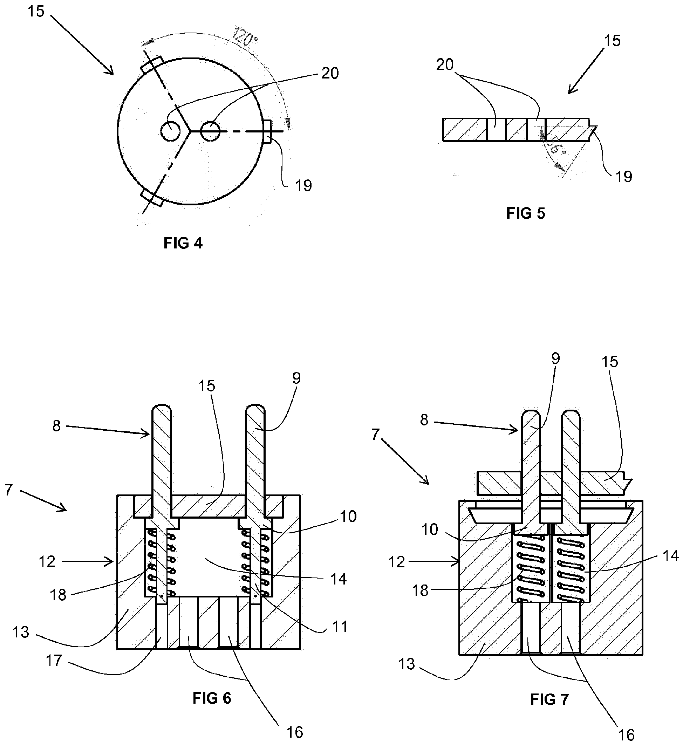

- la figure 4 est une vue de dessus d'une réalisation du couvercle amovible ;
- la figure 5 est une vue de latérale d'une réalisation du couvercle amovible ;
- la figure 6 est une vue de coupe transversale d'une réalisation du connecteur amovible, avantageusement ce connecteur peut d'adapter une douille de format G5 au format G13 ;
- la figure 7 est une vue de coupe transversale d'une autre réalisation du connecteur amovible avantageusement ce connecteur permet de rallonger la longueur d'un tube ayant une douille de format G5 tout en conservant le format de la douille.

### DESCRIPTION DETAILLEE

Avant d'entrer dans le détail de formes préférées de réalisation de l'invention en référence aux dessins notamment, d'autres caractéristiques optionnelles de l'invention, qui peuvent être mises en oeuvre de façon combinée selon toutes combinaisons ou de manière alternative, sont indiquées ci-après :
- la base comprend une première série d'au moins un trou chacun configurée pour coopérer avec le au moins un picot.
- le corps comprend au moins un volume intérieur, un couvercle amovible et un élément de rappel, et dans lequel le au moins un picot additionnel est mobile dans le volume intérieur du corps à l'encontre de l'élément de rappel contre la base.
- le au moins un picot additionnel comprend une portion de fixation configurée pour traverser le couvercle amovible.
- le picot additionnel comprend une butée configurée pour limiter le débattement du au moins un picot additionnel dans le volume intérieur du corps.
- le au moins un picot additionnel comprend une portion de maintien de l'élément de rappel.
- la base du corps comprend au moins une deuxième série d'au moins un trou configurée pour coopérer avec la portion de maintien du au moins un picot additionnel et pour guider la mobilité dudit au moins un picot additionnel dans le volume intérieur.
- le au moins un picot additionnel à une dimension en longueur supérieure à la dimension en longueur du corps.
- la portion de fixation à une dimension en longueur 1,5 fois plus grande que la dimension en longueur de la portion de maintien.
- la première série de au moins un trou est configurée pour être plus proche du centre de la base que les trous de la deuxième série de trous.
- Le au moins un trou de la première série de trous est configurée pour être aligné avec le au moins un picot additionnel.
- les extrémités du tube sont isolées électriquement de la portion principale.
- le dispositif d'éclairage est étanche à l'eau.
- l'étanchéité du dispositif d'éclairage satisfait la norme IP67.
- l'élément émettant de la lumière est une diode électroluminescente (LED).
- le tube comprend deux picots à chacune de ses extrémités.
- le dispositif d'alimentation électrique (A) est un transformateur relié par un deuxième cordon à une fiche électrique
- le dispositif d'alimentation électrique (A) est un transformateur comprenant une fiche électrique reliée à une source d'électricité.
- le dispositif d'alimentation électrique (A) est une fiche électrique.
- le raccord entre le premier cordon et le dispositif d'alimentation électrique est une prise électrique de format « jack ».
- le au moins un connecteur amovible à une forme de cylindre.
- le diamètre du au moins un connecteur amovible est compris entre 10mm et 35mm et de préférence de 24,4mm.
- le au moins un picot et/ou le au moins un picot additionnel à une dimension comprise entre 6 mm et 10 mm et de préférence 8 mm.
- Le au moins un trou de la première série de trous dans la base du corps à un diamètre comprit entre 0,7mm et 3,8mm et de préférence 2,5mm.
- Le au moins un trou de la deuxième série de trous dans la base du corps à un diamètre comprit entre 0,5mm et 2,3mm et de préférence 1,5mm.
- la portion de maintien du au moins un picot additionnel à une dimension comprise entre 5mm et 20mm et de préférence 10mm.
- la portion de maintien du au moins un picot additionnel à un diamètre comprit entre 0,3mm et 2,1 mm et de préférence 1,2mm.
- le au moins un couvercle amovible comprend au moins un ergot de maintien.
- le au moins un couvercle amovible comprend trois ergots de maintien, dont deux ergots successifs sont espacés pour former un secteur angulaire de 120°.
- Le au moins un élément de rappel est un ressort hélicoïdal.
- Le au moins un élément de rappel est une pièce en caoutchouc.
- Le au moins un socle comprend au moins un élément de fixation configurée pour coopérer avec le au moins un picot.
- deux connecteurs amovibles sont positionnés chacun à une des extrémités.

Dans le cadre de l'invention, il est rappelé qu'un « picot » est *une « petite pièce ou partie de pièce pointue, destinée à être engagée dans l'un des trous prévus à cet effet dans l'élément (film, ruban perforé, etc.) qu'elle est chargée d'arrimer* ».

Les formats de douilles G5 et G13 sont connus dans le secteur d'activité. Ainsi, une douille de format G13 a avantageusement des picots ayant un entraxe plus long que celui des picots d'une douille G5.

D'autre part, le terme longueur fait référence à la dimension longitudinale d'un dispositif.

L'invention qui va être décrite ci-dessous est relative à un dispositif d'éclairage et plus spécifiquement à un tube d'éclairage pour aquarium.

Le dispositif d'éclairage comprend un tube 1. Le tube 1 comprend une portion principale 2 s'étendant suivant une dimension longitudinale entre deux extrémités 5 et une partie d'alimentation électrique 3.
La portion principale comprend avantageusement au moins un élément émettant de la lumière. Avantageusement, l'élément émettant de la lumière comprend au moins une, et de préférence plusieurs, diodes électroluminescentes (LED). D'autres éléments émettant de la lumière sont aussi envisageables comme par exemple la présence de tube fluorescent tels que des néons.

Avantageusement, la partie d'alimentation électrique 3 comprend un premier cordon d'alimentation 4 raccordé à l'une de ses extrémités à la portion principale 2, et à l'autre de ses extrémités à un dispositif d'alimentation électrique A. Avantageusement, le dispositif d'alimentation électrique A peut-être l'un parmi une fiche électrique ou un transformateur électrique permettant de réguler la tension et l'intensité du courant délivré dans le dispositif d'éclairage. Dans la réalisation où le dispositif d'alimentation électrique A est un transformateur, ce dernier comprend l'un parmi une fiche électrique, ou un deuxième cordon d'alimentation. Dans la réalisation comprenant un deuxième cordon d'alimentation, ce dernier est relié à l'une de ses extrémités au transformateur, et à l'autre de ses extrémités à une fiche électrique. Dans toutes les réalisations, la fiche électrique est configurée pour pouvoir être branchée sur une prise électrique raccordée à une source d'énergie. Avantageusement, dans la réalisation dans laquelle le dispositif d'alimentation électrique A est un transformateur, le premier cordon d'alimentation 4 est raccordé audit dispositif d'alimentation électrique A par une fiche électrique de format jack. Avantageusement la partie d'alimentation électrique 3 est configurée pour délivrer à la portion principale 2 une puissance électrique comprise entre 3W (Watt) et 40W-et de préférence entre 7W et 20W.

Avantageusement, au moins l'une des deux extrémités 5 de la portion principale 2 comprend au moins un picot 6. Dans la réalisation préférée de l'invention, les deux extrémités 5 de la portion principale 2 comprennent chacune deux picots 6. Avantageusement, ces picots 6 permettent un maintien en position du dispositif d'éclairage dans un socle et notamment grâce à la présence d'au moins une douille sur ledit socle.
Avantageusement, le diamètre des extrémités 5 est compris entre 15mm (10⁻³ mètre) et 35mm et est de préférence de 24,4mm. Toujours dans la réalisation préférée de l'invention, la longueur de l'extrémité est comprise entre 10mm et 40mm et de préférence entre 22mm et 34 mm et de préférence de 28mm.
Avantageusement, et non limitativement, les picots 6 et plus généralement les extrémités 5 sont configurés pour correspondre à l'une parmi les normes de douille G5 ou G13. Ainsi, les extrémités 5 et les picots 6 reprennent les caractéristiques des normes T5 et/ou T8. Cette configuration avantageuse permet au dispositif d'éclairage de coopérer avec un socle préexistant. Ainsi, la compatibilité du dispositif d'éclairage avec les systèmes actuels est garantie pour la très grande majorité des installations. Avantageusement, les extrémités 5 et notamment les picots 6 sont isolés électriquement de la portion principale 2. On entend par isolé électriquement, l'impossibilité pour un courant électrique de passer du tube principal 2 à l'extrémité 5, et au picot 6.
Avantageusement, la portion principale 2 est étanche. Ainsi, lorsque le dispositif est plongé dans un liquide, son étanchéité, ainsi que l'isolation électrique des extrémités 5 et des picots 6 permet une utilisation sans risque. Avantageusement, l'étanchéité du dispositif répond à la norme IP67. De ce fait, le dispositif est adaptable sur des installations préexistantes et dont l'alimentation électrique passait par les picots des douilles présentes sur les tubes. En étanchéifiant les extrémités du tube 1 de la présente invention, l'ancienne alimentation électrique devient alors inactive, et les picots 6 ont alors un rôle de maintien mécanique.
Afin de garantir la sécurité d'utilisation du dispositif, les extrémités 5 sont avantageusement en plastique. Les picots 6 peuvent être en plastique ou en acier inoxydable. Dans tous les cas, il n'y a de préférence aucun contact entre les picots 6 et la portion principale 2. Avantageusement la portion principale est en plastique ou en verre et elle est scellée sous ses extrémités 5. Ainsi, l'étanchéité de la portion principale 2 ainsi que son isolation électrique vis-à-vis des extrémités 5 est garantie.

Avantageusement au moins un connecteur amovible 7 peut se positionner sur au moins une extrémité 5 de la portion principale 2. De manière préférentielle, deux connecteurs amovibles 7 se positionnent sur les deux extrémités 5 de la portion principale 2. Avantageusement le connecteur amovible 7 a une forme similaire à celle des extrémités 5. Dans la réalisation préférée de l'invention, le connecteur amovible 7 a une forme cylindrique. Avantageusement le diamètre d'un connecteur amovible 7 est compris entre 10mm et 35mm et de préférence de 24,4mm.
Avantageusement, les connecteurs amovibles 7 comprennent un corps 12 et au moins un picot additionnel 8 et de préférence deux picots additionnels 8.
Avantageusement le picot 6 et/ou le picot additionnel 8 ont une dimension comprise entre 1 mm et 3,5mm et de préférence 2mm.

Avantageusement, le corps 12 comprend une base 13, un volume intérieur 14, un élément de rappel 18 et un couvercle 15 amovible.
Avantageusement, la base 13 comprend une première série de trous 16. Dans une réalisation alternative de l'invention, la base comprend, en plus de la première série de trous 16 une deuxième série de trous 17.
Avantageusement, le trou de la première série de trous 16 dans la base 13 du corps 12 a un diamètre compris entre 0,7mm et 3,8mm et de préférence 2,5mm. Avantageusement, le trou de la deuxième série de trous 17 dans la base 13 du corps 12 à un diamètre comprit entre 0,5mm et 2,3mm et de préférence 1,5mm.
Dans la réalisation préférée de l'invention, la première série de trous 16 et la deuxième série de trous 17 comprennent chacune deux trous.
Avantageusement les trous de la première série de trous 16 sont situés sur un cercle de centre à celui du connecteur amovible 7.
Dans la réalisation comprenant les deux séries de trous 16 et 17, les trous de la deuxième série de trous 17 sont positionnés sur un cercle à la fois concentrique à celui des trous de la première série de trous 16 et d'un diamètre supérieur au cercle de la première série de trous 16.
Avantageusement, les trous de la première et de la deuxième série de trous 16 et 17 sont alignés, et de préférence qu'ils sont positionnés sur un diamètre du connecteur amovible 7 qui est de préférence de forme cylindrique.

Avantageusement, le couvercle 15 amovible a une section principale de disque. De plus, ledit couvercle 15 amovible comprend au moins un orifice 20 permettant le passage du picot additionnel 8. Avantageusement, le couvercle 15 amovible comprend autant d'orifices 20 qu'il y a de picots additionnels 8.
Avantageusement, le couvercle 15 amovible est maintenu en position sur le corps 12 grâce à au moins un ergot 19 situé sur la bordure extérieure dudit couvercle 15 amovible. Dans cette réalisation, le corps 12 comprend sur sa partie supérieure, au moins une cavité configurée pour coopérer avec ledit ergot 19. Avantageusement, ledit ergot comprend une portion supérieure plate, et une portion inclinée liant l'extrémité distale de la portion supérieure avec la bordure extérieure dudit couvercle 15 amovible. Avantageusement, la pente de l'inclinaison de la portion inclinée est comprise entre 45° et 75° et de préférence de 56°.
Avantageusement, le couvercle 15 amovible comprend trois ergots 19. Avantageusement, les trois ergots 19 sont répartis équitablement sur le pourtour du couvercle 15 amovible. Ainsi, dans cette réalisation, deux ergots successifs délimitent un secteur angulaire de 120°.

Le volume intérieur 14 s'étend entre la partie supérieure de la base 13, et la partie inférieure du couvercle 15. Avantageusement, l'élément de rappel 18 est situé à l'intérieur du volume intérieur. De manière préférentielle l'élément de rappel 18 est un ressort hélicoïdal. Avantageusement un élément de rappel 18 est présent pour chaque picot additionnel 8 présent sur le connecteur amovible 7.
Dans une réalisation alternative, l'élément de rappel 18 est une pièce en caoutchouc configurée pour se déformer élastiquement. Avantageusement, dans cette réalisation, le volume intérieur est suffisamment élevé pour que la pièce en caoutchouc puisse se déformer.

Avantageusement, le ou les picots additionnels 8 comprennent au moins une portion de fixation 9 et une butée 10. Dans une réalisation de l'invention, le picot additionnel 8 comprend aussi une portion de maintien 11.
Dans toutes les réalisations, la portion de fixation 9 passe au travers des orifices 20 du couvercle 15 amovible. L'une des extrémités de la portion de fixation 9 est reliée à la butée 10. La butée 10 et l'extrémité de la fixation 9 afférente sont dans le volume intérieur 14 du corps 12. L'autre extrémité de la portion de fixation 9 est à l'extérieur du corps 12 au travers du couvercle 15 amovible. Avantageusement, la longueur de la portion de fixation 9 est supérieure à la dimension en longueur du volume intérieur 14. Avantageusement, la longueur de la butée 10 est strictement supérieure au diamètre des orifices 20 du couvercle 15 amovible.
Cette configuration avantageuse permet notamment à la portion de fixation 9 de ne jamais s'échapper complètement du connecteur amovible 7. En effet, la butée 10 vient limiter le débattement maximum de la portion de fixation 9 à l'intérieur du volume intérieur 14. De manière préférentielle, l'élément de rappel 18 est situé en dessous de la butée 10. De cette manière, l'élément de rappel 18, en position de repos, vient plaquer la butée 10 contre la partie inférieure du couvercle 15 amovible. Cette configuration avantageuse permet notamment l'extériorisation maximale de la portion de fixation 9. De plus, dans cette configuration, une pression sur la portion de fixation 9 permet de faire rentrer le picot additionnel 8 dans le volume intérieur 14. Le débattement vers l'intérieur du connecteur amovible 7 du picot additionnel 8 est stoppé lorsque l'élément de rappel est comprimé au maximum. Dans une réalisation alternative de l'invention, ce débattement est limité lorsque la butée 10 est au contact de la base 13 du corps 12.
Dans la réalisation alternative du picot additionnel 8 comprenant une portion de maintien 11, l'élément de rappel 18 est avantageusement positionné autour de la portion de maintien 11. Avantageusement, la portion de maintien 11 a un diamètre et une longueur inférieurs à ceux de la portion de fixation 9. Avantageusement, la portion de fixation 9 est 1,5 fois plus grande que la portion de maintien 11. Avantageusement, la portion de maintien 11 du picot additionnel 8 a un diamètre compris entre 0,3mm et 2,1mm et de préférence 1,2mm. De plus, la portion de maintien 11 du picot additionnel 8 a une longueur comprise entre 5mm et 20mm et de préférence 10mm. Ainsi, la longueur de la portion de fixation est comprise entre 7,5mm et 30mm et de préférence 15mm.
Dans cette réalisation, l'une des extrémités de la portion de maintien 11 est reliée à la butée 10. L'autre extrémité de la portion de maintien 11 est insérée dans un trou de la deuxième série de trous 17 dans la base 13 du corps 12. Cette coopération permet le guidage du picot additionnel 8 lors de sa mobilité relative au corps 12. En effet, dans cette configuration, le picot additionnel 8 est guidé par sa partie de fixation 9 grâce au trou dans le couvercle 15. Mais aussi, par sa partie de maintien 11 positionnée dans un trou de la deuxième série de trous 17.

Avantageusement, le connecteur 7 coopère avec l'extrémité 5 grâce au picot 6 venant s'insérer dans le trou de la première série de trous 16. Dans la réalisation ne comprenant pas de deuxième série de trous 17, les trous de la première série de trous sont avantageusement alignés avec le picot additionnel 8.
Cette configuration avantageuse des connecteurs 7 permet au dispositif d'éclairage de modifier sa longueur totale. En effet, d'une part en ajoutant un connecteur 7 à au moins l'une des extrémités 5 de la portion principale 2 on augmente la longueur du tube. De plus, les picots additionnels 8 sont, dans leur configuration préférée rétractables. Cette configuration avantageuse permet encore une adaptabilité plus fine du dispositif en fonction des installations déjà existantes. En effet, cette rétractabilité permet l'adaptation finale. Ainsi, le dispositif peut s'adapter plus facilement à l'ensemble des socles existant. De plus, les connecteurs amovibles 7 peuvent avoir des configurations de picots additionnels 8 différentes de la configuration des picots 6. De cette manière, une extrémité 5 configurée pour s'adapter à la norme de douille G5, peut être adaptée, grâce à un connecteur amovible 7 à une douille de norme G13 et vice versa.
De ce fait, le dispositif d'éclairage peut s'adapter très facilement à une très grande gamme de socles préexistants.

L'assemblage d'un connecteur amovible 7 se fait dans l'ordre suivant :
- ouverture du couvercle 15 amovible ;
- positionnement du au moins un élément de rappel 18 ;
- positionnement du au moins un picot additionnel 8 ;
- fermeture du couvercle 15 amovible.

Le dispositif peut comprendre un seul connecteur amovible 7 à une seule extrémité 5 du tube 1. Chacune des extrémités 5 peut aussi être équipée d'un connecteur amovible 7.

De plus, le dispositif peut comprendre un jeu de connecteurs amovibles 7 (au moins deux) pouvant ou non être employés pour équiper une extrémité. De plus, au moins deux connecteurs amovibles 7 peuvent être de longueurs différentes. Ainsi, une grande pluralité de combinaisons finales est offerte.

L'invention concerne aussi un système comprenant le dispositif d'éclairage et son socle. Avantageusement le socle peut être soit présent avant l'insertion du dispositif, soit être positionné en même temps. Le socle est de préférence un socle standard, c'est-à-dire présent dans la majorité des aquariums. Le socle n'est pas alimenté électriquement. Le socle comprend au moins une et de préférence deux douilles coopérant avec l'un parmi le picot 6 ou le picot additionnel 8 afin de maintenir en position le dispositif d'éclairage.

L'invention n'est pas limitée aux modes de réalisation précédemment décrits, mais s'étend à tous modes de réalisation conformes à son esprit.

De même que les normes évoquées ne sont pas limitatives et que d'autres configurations sont bien entendu possibles tout en gardant l'adaptabilité du système.

L'invention peut être commercialisée en kit, notamment des kits de connecteurs amovibles 7 prêts à être montés sur des tubes 1.

### REFERENCES

- 1.: tube
- 2.: portion principale
- 3.: partie d'alimentation électrique
- 4.: premier cordon d'alimentation
- 5.: extrémité
- 6.: picot
- 7.: connecteur amovible
- 8.: picot additionnel
- 9.: portion de fixation
- 10.: butée
- 11.: portion de maintien
- 12.: corps
- 13.: base
- 14.: volume intérieur
- 15.: couvercle
- 16.: première série de trous
- 17.: deuxième série de trous
- 18.: élément de rappel
- 19.: ergot
- 20.: orifice
- A.: Dispositif d'alimentation électrique

## Revendications

1. Dispositif d'éclairage comprenant un tube (1) qui comprend :
∘ une portion principale (2) s'étendant suivant une dimension longitudinale du tube et comprenant au moins un élément émettant de la lumière,
∘ une partie d'alimentation électrique (3) du tube comprenant un premier cordon d'alimentation (4) raccordé par l'une de ses extrémités à la portion principale (2) et adapté à l'autre de ses extrémités pour être raccordé à un dispositif d'alimentation électrique (A),
∘ deux extrémités (5) entre lequel s'étend la portion principale (2),
**caractérisé en ce qu'**au moins l'une des extrémités (5) du tube comprend au moins un picot (6) configuré pour coopérer avec l'un parmi un socle ou un connecteur amovible (7).

2. Dispositif selon la revendication précédente comprenant un connecteur amovible (7) et dans lequel le connecteur amovible (7) comprend au moins un corps (12) et au moins un picot additionnel (8), et dans lequel ledit corps (12) comprend une base (13) configurée pour coopérer avec l'un des picots (6) de l'une des extrémités (5) du tube et dans lequel le au moins un picot additionnel (8) est configuré pour coopérer avec un socle.

3. Dispositif selon la revendication précédente dans lequel la base (13) comprend une première série d'au moins un trou (16) chacun configurée pour coopérer avec le au moins un picot (6).

4. Dispositif selon l'une des deux revendications précédentes, dans lequel le corps (12) comprend au moins un volume intérieur (14), un couvercle (15) amovible et un élément de rappel (18), et dans lequel le au moins un picot additionnel (8) est mobile dans le volume intérieur (14) du corps (12) à l'encontre de l'élément de rappel (18) contre la base.

5. Dispositif la revendication précédente dans lequel le au moins un picot additionnel (8) comprend une portion de fixation (9) configurée pour traverser le couvercle (15) amovible.

6. Dispositif selon l'une quelconque des deux revendications précédentes dans lequel le picot additionnel (8) comprend une butée (10) configurée pour limiter le débattement du au moins un picot additionnel (8) dans le volume intérieur (14) du corps (12).

7. Dispositif selon l'une quelconque des trois revendications précédentes dans lequel le au moins un picot additionnel (8) comprend une portion de maintien (11) de l'élément de rappel (18).

8. Dispositif selon la revendication précédente dans lequel la base (13) du corps (12) comprend au moins une deuxième série d'au moins un trou (17) configurée pour coopérer avec la portion de maintien (11) du au moins un picot additionnel (8) et pour guider la mobilité dudit au moins un picot additionnel (8) dans le volume intérieur (14).

9. Dispositif selon l'une des deux revendications précédentes dans lequel la première série de trous (16) est configurée pour être plus proche du centre de la base (13) que la deuxième série de trous (17).

10. Dispositif selon l'une quelconque des revendications 3 à 6 dans lequel le au moins un trou la première série de trous (16) est configuré pour être aligné avec le au moins un picot additionnel (8).

11. Dispositif selon l'une quelconque des revendications 2 à 10, dans lequel deux connecteurs amovibles (7) sont positionnés chacun à une des extrémités (5).

12. Dispositif selon l'une quelconque des revendications précédentes dans lequel les extrémités (5) du tube sont isolées électriquement de la portion principale (2).

13. Dispositif selon l'une quelconque des revendications précédentes dans lequel le dispositif d'éclairage est étanche à l'eau.

14. Système comprenant un dispositif d'éclairage selon la revendication 1 prise seule ou en combinaison avec les revendications 12 ou 13 et un socle, **caractérisé en ce que** le socle comprend un élément de fixation configurée pour coopérer avec le au moins un picot (6).

15. Système comprenant un dispositif d'éclairage selon la revendication 2 prise seule ou en combinaison avec l'une quelconque des autres revendications précédentes, et un socle ;
**caractérisé en ce que** le socle comprend un élément de fixation configurée pour coopérer avec l'un parmi le au moins un picot (6) ou le au moins un picot additionnel (8).
